# EUROPEAN PATENT APPLICATION

(11) **EP 4 841 207 A2**
(43) Date of publication of application: **18.11.2026**
(21) Application number: 26173731.6
(22) Date of filing: 21.04.2026
(51) Int. Cl.: G01B 11/24

(54) **METHOD FOR EXTRACTING 3D SHAPE OF OBJECT USING MULTIPLE CONTACTLESS SENSORS**

(30) Priority: 23.04.2025 KR 20250053068
(71) Applicant: AIVEX Co., Ltd., Yongin-si, Gyeonggi-do 16942 (KR)
(72) Inventor: BANG, Seongdeok, 02587 Seoul (KR)
(74) Representative: De Ros, Alberto

(57) **Abstract**

According to an embodiment of the present disclosure, a method performed in a computing device for extracting a 3D shape of an object using a plurality of contactless sensors is disclosed. Specifically, according to the present disclosure, the computing device generates positional relationship information between a first sensor and a second sensor based on positions of the first sensor and the second sensor, generates first point cloud data corresponding to at least a part of a target object based on the first sensor, generates second point cloud data corresponding to at least a part of the target object based on the second sensor, determines weight information for the first point cloud data and the second point cloud data, and generates 3D shape data corresponding to the target object based on the first point cloud data, the second point cloud data, and the weight information.

## Description

### CROSS-REFERENCE TO RELATED APPLICATIONS

This application claims priority to and the benefit of Korean Patent Application No. 10-2025-0053068 filed in the Korean Intellectual Property Office on April 23, 2025, the entire contents of which are incorporated herein by reference.

### TECHNICAL FIELD

The present disclosure relates to a method for extracting a 3D shape of an object using a plurality of contactless sensors. Specifically, the present disclosure relates to a method for determining weight information for data generated by a plurality of contactless sensors including a first sensor and a second sensor, and finally generating 3D shape data corresponding to a target object by registering point cloud data corresponding to at least a part of the target object generated by each sensor data according to a positional relationship of the sensors.

### BACKGROUND ART

Technology for scanning a 3D shape of an object is essentially used in various industrial fields such as manufacturing, quality control, and robot vision. Generally, a contact sensor or a contactless sensor is used to acquire a 3D shape of an object.

A method using a contact sensor involves a sensor probe actually contacting a surface of an object to acquire point data, which can provide relatively high precision. However, it takes a very long time for measurement, and there is a problem that it is difficult to apply to objects having complex or flexible shapes. In particular, there are significant practical constraints on putting it into a mass production process or an automated line.

On the other hand, a contactless method has advantages in that a shape of an object can be quickly acquired and can be flexibly linked with an automated system. However, in the contactless method, measurement accuracy may decrease depending on external lighting conditions, reflectance of an object, complexity of a curved surface, and the like, and in particular, it is difficult to precisely reproduce a fine detailed shape due to limitations of a sensor.

Accordingly, there is a demand in the art for a technology capable of ensuring higher accuracy than conventional methods while efficiently extracting a 3D shape of an object by utilizing a contactless sensor.

Korean Patent Application Publication No. KR 2025-0043223 discloses a method and apparatus for intelligent anomaly detection.

### SUMMARY OF THE INVENTION

The present disclosure has been devised in response to the aforementioned background art, and specifically, relates to a method for determining weight information for data generated by a plurality of contactless sensors including a first sensor and a second sensor, and finally generating 3D shape data corresponding to a target object by registering point cloud data corresponding to at least a part of the target object generated by each sensor data according to a positional relationship of the sensors.

Meanwhile, the technical problem to be achieved by the present disclosure is not limited to the technical problems mentioned above, and various technical problems may be included within a range that is obvious to those skilled in the art from the contents described below.

According to an embodiment of the present disclosure for achieving the technical problem as described above, a method performed in a computing device for extracting a 3D shape of an object using a plurality of contactless sensors is disclosed. The method may include: generating positional relationship information between a first sensor and a second sensor based on positions of the first sensor and the second sensor; generating first point cloud data corresponding to at least a part of a target object based on the first sensor; generating second point cloud data corresponding to at least a part of the target object based on the second sensor; determining weight information for the first point cloud data and the second point cloud data; and generating 3D shape data corresponding to the target object based on the first point cloud data, the second point cloud data, and the weight information.

In an embodiment, the method may further include, prior to determining the weight information for the first point cloud data and the second point cloud data, generating a validity verification result for the first point cloud data and the second point cloud data using an artificial neural network model.

In an embodiment, the generating of the validity verification result for the first point cloud data and the second point cloud data using the artificial neural network model may include: detecting whether the first sensor is abnormal based on inputting the first point cloud data into the artificial neural network model; detecting whether the second sensor is abnormal based on inputting the second point cloud data into the artificial neural network model; and generating the validity verification result based on whether the first sensor is abnormal and whether the second sensor is abnormal.

In an embodiment, the artificial neural network model may be an AutoEncoder-based artificial neural network model, and the detecting of whether the first sensor is abnormal based on inputting the first point cloud data into the artificial neural network model may include: detecting whether the first sensor is abnormal based on a reconstruction error of the artificial neural network model for the first point cloud data.

In an embodiment, the detecting of whether the first sensor is abnormal based on inputting the first point cloud data into the artificial neural network model may further include: generating user notification information related to an abnormality of the first sensor when the reconstruction error of the first sensor for the first point cloud data is equal to or greater than a predetermined threshold value.

In an embodiment, the determining of the weight information for the first point cloud data and the second point cloud data may include: determining location-based weight information based on a distance between the first sensor and the target object and a distance between the second sensor and the target object; determining data-based weight information based on comparing the number of points of the first point cloud data and the second point cloud data; and determining the weight information based on combining the location-based weight information and the data-based weight information.

In an embodiment, the determining of the location-based weight information based on the distance between the first sensor and the target object and the distance between the second sensor and the target object may include: allocating a higher location-based weight as a distance between the target object and each sensor is closer.

In an embodiment, the determining of the data-based weight information based on comparing the number of points of the first point cloud data and the second point cloud data may include: allocating a higher data-based weight as the number of points included in each point cloud data is larger.

In an embodiment, the method may further include, prior to generating the 3D shape data corresponding to the target object based on the first point cloud data, the second point cloud data, and the weight information: determining a first offset value corresponding to the first sensor; determining a second offset value corresponding to the second sensor; correcting the first point cloud data based on the first offset value; and correcting the second point cloud data based on the second offset value.

In an embodiment, the determining of the first offset value corresponding to the first sensor may include: generating a measurement value corresponding to a first point of the target object using the first sensor; generating a measurement value corresponding to the first point using a third sensor which is a contact sensor; and determining the first offset value based on comparing the measurement values generated using the first sensor and the third sensor corresponding to the first point.

According to another embodiment of the present disclosure, a computer program stored on a computer-readable storage medium for causing a computing device to perform operations for extracting a 3D shape of an object using a plurality of contactless sensors is disclosed. The operations may include: generating positional relationship information between a first sensor and a second sensor based on positions of the first sensor and the second sensor; generating first point cloud data corresponding to at least a part of a target object based on the first sensor; generating second point cloud data corresponding to at least a part of the target object based on the second sensor; determining weight information for the first point cloud data and the second point cloud data; and generating 3D shape data corresponding to the target object based on the first point cloud data, the second point cloud data, and the weight information.

According to another embodiment of the present disclosure, a computing device for extracting a 3D shape of an object using a plurality of contactless sensors is disclosed. The computing device includes one or more processors and a memory, and the one or more processors may be configured to: generate positional relationship information between a first sensor and a second sensor based on positions of the first sensor and the second sensor; generate first point cloud data corresponding to at least a part of a target object based on the first sensor; generate second point cloud data corresponding to at least a part of the target object based on the second sensor; determine weight information for the first point cloud data and the second point cloud data; and generate 3D shape data corresponding to the target object based on the first point cloud data, the second point cloud data, and the weight information.

According to the present disclosure, more precise 3D shape information may be generated by measuring a 3D shape of an object using a plurality of contactless sensors and registering point cloud data acquired from each sensor. In particular, by integrating data by assigning weights according to reliability or characteristics for each sensor, an influence of errors or noise of a specific sensor may be minimized and overall measurement accuracy may be improved. Therefore, according to the present disclosure, there is an effect of stably obtaining high-accuracy 3D shape data even for objects having complex shapes or various surface characteristics while using contactless sensors, and a remarkable effect occurs in which overall scan quality and reliability are improved due to a multi-sensor configuration.

Meanwhile, the effects of the present disclosure are not limited to the effects mentioned above, and various effects within a range obvious to those skilled in the art may be included from the contents to be described below.

### BRIEF DESCRIPTION OF THE DRAWINGS

FIG. 1 is a block configuration diagram of a computing device for extracting a 3D shape of an object using a plurality of contactless sensors according to an embodiment of the present disclosure.
FIG. 2 illustrates an exemplary structure of an artificial intelligence-based model according to an embodiment of the present disclosure.
FIG. 3 is a flowchart illustrating a process of extracting a 3D shape of an object using a plurality of contactless sensors according to an embodiment of the present disclosure.
FIG. 4 is a conceptual diagram illustrating a process of generating 3D shape data of an object using a plurality of contactless sensors according to an embodiment of the present disclosure.
FIG. 5 is a conceptual diagram illustrating a process of generating 3D shape data of an object based on synthesizing point cloud data generated by each sensor according to an embodiment of the present disclosure.
FIG. 6 is a brief and general schematic diagram of an exemplary computing environment in which embodiments of the present disclosure may be implemented.

### DETAILED DESCRIPTION

The present disclosure discloses a method for determining weight information for data generated by a plurality of contactless sensors including a first sensor and a second sensor, and finally generating 3D shape data corresponding to a target object by registering point cloud data corresponding to at least a part of the target object generated by each sensor data according to a positional relationship of the sensors.

Various embodiments will now be described with reference to the drawings. In the present specification, various descriptions are presented to provide an understanding of the present disclosure. However, it is apparent that these embodiments may be practiced without such specific descriptions.

The terms "component," "module," "system," and the like used in the present specification refer to a computer-related entity, hardware, firmware, software, a combination of software and hardware, or execution of software. For example, a component may be, but is not limited to, a procedure executed on a processor, a processor, an object, an execution thread, a program, and/or a computer. For example, both an application executed on a computing device and the computing device may be components. One or more components may reside within a processor and/or an execution thread. One component may be localized within one computer. One component may be distributed between two or more computers. In addition, these components may be executed from various computer-readable media having various data structures stored therein. Components may communicate via local and/or remote processes, for example, according to a signal having one or more data packets (e.g., data from one component interacting with another component in a local system or a distributed system, and/or data transmitted over a network such as the Internet via signals with other systems).

Furthermore, the term "or" is intended to mean an inclusive "or" rather than an exclusive "or." That is, unless specified otherwise or clear from the context, "X uses A or B" is intended to mean one of the natural inclusive substitutions. That is, if X uses A; X uses B; or X uses both A and B, "X uses A or B" may apply to any of these cases. In addition, the term "and/or" used in the present specification should be understood to refer to and include all possible combinations of one or more of the listed related items.

In addition, the terms "comprises" and/or "comprising" should be understood to mean that the corresponding feature and/or component is present. However, the terms "comprises" and/or "comprising" should be understood not to exclude the presence or addition of one or more other features, components, and/or groups thereof. In addition, unless specified otherwise or contextually clear to indicate a singular form, the singular in the present specification and claims should generally be interpreted to mean "one or more."

And, the term "at least one of A or B" should be interpreted to mean "a case including only A," "a case including only B," or "a case combined with the configuration of A and B."

Those skilled in the art should further recognize that various illustrative logical blocks, configurations, modules, circuits, means, logics, and algorithm steps described in connection with the embodiments disclosed herein may be implemented as electronic hardware, computer software, or combinations of both. To clearly illustrate the interchangeability of hardware and software, various illustrative components, blocks, configurations, means, logics, modules, circuits, and steps have been described above generally in terms of their functionality. Whether such functionality is implemented as hardware or software depends on the specific application and design constraints imposed on the overall system. Skilled artisans may implement the described functionality in varying ways for each specific application. However, such implementation decisions should not be interpreted as causing a departure from the scope of the present disclosure.

The description of the presented embodiments is provided to enable any person skilled in the art to make or use the present disclosure. Various modifications to these embodiments will be readily apparent to those skilled in the art. The general principles defined herein may be applied to other embodiments without departing from the scope of the present disclosure. Thus, the present disclosure is not limited to the embodiments presented herein. The present disclosure should be interpreted in the broadest scope consistent with the principles and novel features presented herein.

In the present disclosure, "point cloud data" refers to a set of 3D coordinate points obtained as a result of scanning a surface of an object. For example, when an object is scanned using a contactless sensor, X, Y, and Z coordinate information corresponding to each point of the object surface is generated, and these points gather to form one shape. Specifically, a plurality of points calculated based on distance and direction information collected by each sensor are organized into one dataset, which may be a basis for extracting information such as a shape, size, and curvature of an object.

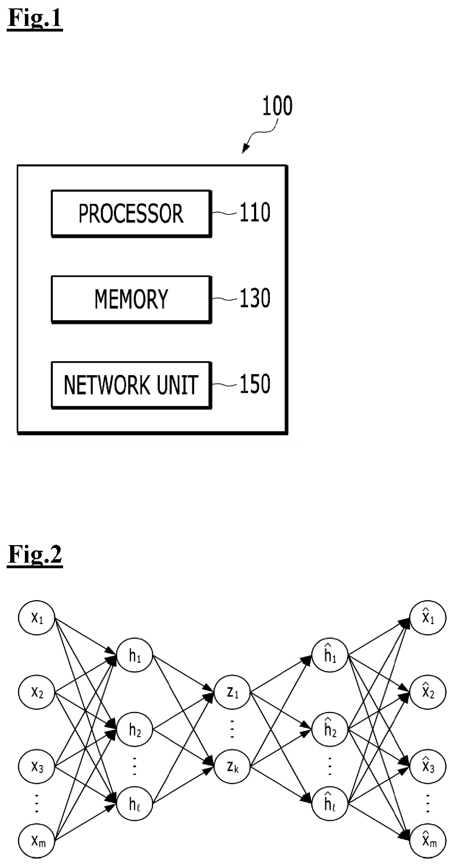

FIG. 1 is a block configuration diagram of a computing device for extracting a 3D shape of an object using a plurality of contactless sensors according to an embodiment of the present disclosure.

The configuration of the computing device 100 shown in FIG. 1 is only an example shown in a simplified manner. In an embodiment of the present disclosure, the computing device 100 may include other components for performing the computing environment of the computing device 100, and only some of the disclosed components may constitute the computing device 100.

The computing device 100 may include a processor 110, a memory 130, and a network unit 150.

The processor 110 may consist of one or more cores and may include a processor for data analysis and deep learning, such as a central processing unit (CPU), a general purpose graphics processing unit (GPGPU), and a tensor processing unit (TPU) of a computing device. The processor 110 may read a computer program stored in the memory 130 to perform data processing for machine learning according to an embodiment of the present disclosure. According to an embodiment of the present disclosure, the processor 110 may perform calculations for training a neural network. The processor 110 may perform calculations for neural network training, such as processing input data for training in deep learning (DL), feature extraction from input data, error calculation, and weight update of a neural network using backpropagation.

At least one of the CPU, GPGPU, and TPU of the processor 110 may process the training of a network function. For example, the CPU and GPGPU together may process the training of the network function and data classification using the network function. Also, in an embodiment of the present disclosure, processors of a plurality of computing devices may be used together to process the training of the network function and data classification using the network function. Also, a computer program executed in the computing device according to an embodiment of the present disclosure may be a CPU, GPGPU, or TPU executable program.

In the present disclosure, the processor 110 may generate positional relationship information between a first sensor and a second sensor for a plurality of sensors including the first sensor and the second sensor. In this case, the positional relationship information may be information on coordinates of each sensor in a rectangular coordinate system around the target object. The first sensor and the second sensor may be sensors of the same type, but different types of sensors may be used, and in this case, a center coordinate serving as a reference for the position of each sensor may be a center of gravity of each sensor or a predefined coordinate.

The positional relationship information between the first sensor and the second sensor may include information on a position between each sensor and the object to be measured and the sensor, in addition to the positional relationship information between sensors. For example, the processor 110 may determine the center coordinates of the target object as (0,0,0), and then determine that the first sensor is located at (3,-4, 5) and the second sensor is located at (-3, -4, -5).

However, the specific expression of generating positional information of a sensor is not limited to the above disclosure, and it is obvious to those skilled in the art that various techniques may be used to appropriately generate positional relationship information for registering data of various sensors including a camera.

The processor 110 may generate first point cloud data corresponding to at least a part of the target object based on the first sensor, while generating second point cloud data corresponding to at least a part of the target object based on the second sensor. In the present disclosure, each of the sensors may be arranged around the target object and may be set to face different directions to generate more accurate 3D shape data according to the shape of the target object.

Each sensor generates point cloud data corresponding to the same target object, and since the target object is a 3D solid, a blind spot that is not included in the measurement range of a fixed sensor may occur. Therefore, the point cloud data generated by utilizing a plurality of sensors corresponds to at least a part of the target object, and the point cloud data generated by utilizing each sensor may have scan data for a part of the target object while also having data corresponding to an overlapping area.

The processor 110 may generate a validity verification result for the first point cloud data and the second point cloud data. Specifically, the processor 110 may use an artificial neural network model to determine whether the first point cloud data and the second point cloud data are data normally acquired by a normal sensor.

To this end, the processor 110 may detect whether the first sensor is abnormal based on inputting the first point cloud data into the artificial neural network model, and detect whether the second sensor is abnormal based on inputting the second point cloud data into the artificial neural network model.

In the present disclosure, the artificial neural network model for identifying whether the sensors are abnormal may be an AutoEncoder-based artificial neural network model. An encoder part of the AutoEncoder-type artificial neural network model maps important features representing input data into a low-dimensional feature space, and a decoder part is trained to restore a feature vector mapped into the feature space back to original data. When data having characteristics not trained by the model, that is, an anomaly, is input to a well-trained AutoEncoder model, the AutoEncoder has a characteristic of not being able to perform restoration of data well.

In the present disclosure, the processor 110 may input point cloud data generated based on each sensor to the trained AutoEncoder model, calculate a reconstruction error from a value output by the model, and then detect whether the corresponding sensor is abnormal based on the reconstruction error. For example, the processor 110 may calculate a reconstruction error for the first point cloud data generated based on the first sensor, and when the reconstruction error is equal to or greater than a predetermined threshold value, determine that the first point cloud data input to the AutoEncoder model includes an anomaly and is in an abnormal state.

That point cloud data generated by each sensor includes an anomaly may mean that the state of the sensor is not normal. Therefore, in the present disclosure, when the reconstruction error for the first point cloud data generated based on the first sensor is equal to or greater than a predetermined threshold value, the processor 110 may notify a user that repair or replacement of the first sensor is necessary by generating user notification information related to an abnormality of the first sensor. When the processor 110 identifies that all sensors are in a normal state, the processor 110 may generate a validity verification result determining that each data is valid for the first point cloud data and the second point cloud data.

The processor 110 may determine weight information for the first point cloud data and the second point cloud data. In the present disclosure, the weight information is a real value between 0 and 1 assigned according to each sensor, and may be a value such that the sum of weights assigned to each sensor is 1. For example, the processor 110 may determine values such as 0.6 for the first point cloud data and 0.4 for the second point cloud data as weights. In this case, the processor 110 may determine weights using various criteria that can determine reliability of data.

Specifically, in order to determine weight information for the first point cloud data and the second point cloud data, the processor 110 may determine location-based weight information based on a distance between each sensor and the target object, while determining data-based weight information based on comparing the number of points of the first point cloud data and the second point cloud data, and then finally determine weight information based on combining the location-based weight information and the data-based weight information.

In the present disclosure, as the distance between a sensor and the target object is shorter, the possibility of errors due to interference or reflection may decrease. Therefore, in order to determine location-based weight information, the processor 110 may allocate a higher value of location-based weight as the distance between the target object and each sensor is shorter. For example, when a distance between a center of the target object and a center of the first sensor is 4 cm and a distance between the center of the target object and the center of the second sensor is 1 cm, the processor 110 may determine a location-based weight for the first point cloud data as 0.2 and a location-based weight for the second point cloud data as 0.8.

Meanwhile, since it can be expected that accuracy of data in a corresponding area will be high when point cloud data is generated more densely, the processor 110 may allocate a higher data-based weight as the number of points included in the point cloud data generated by each sensor is larger. For example, when the first point cloud data includes 13,000 points and the second point cloud data includes 7,000 points, the processor 110 may determine a data-based weight for the first point cloud data as 0.65 and a data-based weight for the second point cloud data as 0.35.

The processor 110 may finally determine weight information based on combining the location-based weight information and the data-based weight information. For example, when the location-based weight of the first point cloud data is 0.2 and the data-based weight is 0.65, and the location-based weight of the second point cloud data is 0.8 and the data-based weight is 0.35, the processor 110 may determine the weight of the first point cloud data as (0.2+0.65)/2=0.425 and the weight of the second point cloud data as (0.8+0.35)/2=0.575.

In a process of generating 3D shape data utilizing a non-contact sensor, each sensor may have a certain offset. Since it is difficult to normally register point cloud data generated in each sensor if such an offset is neglected, the present disclosure includes a configuration for identifying and correcting an accurate value of such an offset.

The processor 110 may determine a first offset value corresponding to the first sensor and determine a second offset value corresponding to the second sensor.

In order to determine the first offset value, the processor 110 may determine a specific point of the target object as a first point and generate a measurement value corresponding to the first point of the target object utilizing the first sensor. Thereafter, the processor 110 may utilize a third sensor, which is a contact sensor, to generate a measurement value corresponding to the same first point. In this case, since the third sensor scans only a specific point rather than the entire target object, a process of determining the first offset value does not take much time. The processor 110 may determine a first offset value corresponding to the first sensor based on comparing a measurement value generated utilizing the first sensor and a measurement value generated utilizing the third sensor corresponding to the first point. The same process as above may be performed by the processor 110 for other sensors including the second sensor.

Thereafter, the processor 110 may correct the first point cloud data based on the first offset value and correct the second point cloud data based on the second offset value. For example, when the first offset value is measured as (0, 0, 0.1), the processor 110 may perform correction by (0, 0, -0.1) for all data included in the first point cloud data. The same process as above may be performed by the processor 110 for other sensors including the second sensor.

Thereafter, the processor 110 may generate 3D shape data corresponding to the target object based on the corrected first point cloud data, the corrected second point cloud data, and weight information. Specifically, the processor 110 may register the first point cloud data and the second point cloud data utilizing positional relationship information of the first sensor and the second sensor, and generate 3D shape data corresponding to the target object by applying weights to each point cloud data.

In the present disclosure, more precise 3D shape information may be generated by measuring a 3D shape of an object using a plurality of contactless sensors and registering point cloud data acquired from each sensor. In particular, by auxiliary utilizing a contact sensor to perform calibration of each contactless sensor and integrating data by assigning weights according to reliability or characteristics for each sensor, an influence of errors or noise of a specific sensor may be minimized and overall measurement accuracy may be improved. Therefore, according to the present disclosure, there is an effect of stably obtaining high-accuracy 3D shape data even for objects having complex shapes or various surface characteristics while using contactless sensors, and a remarkable effect occurs in which overall scan quality and reliability are improved due to a multi-sensor configuration.

According to an embodiment of the present disclosure, the memory 130 may include at least one type of storage medium among a flash memory type, a hard disk type, a multimedia card micro type, a card type memory (e.g., SD or XD memory, etc.), RAM (Random Access Memory), SRAM (Static Random Access Memory), ROM (Read-Only Memory), EEPROM (Electrically Erasable Programmable Read-Only Memory), PROM (Programmable Read-Only Memory), a magnetic memory, a magnetic disk, and an optical disk. The computing device 100 may operate in association with a web storage that performs a storage function of the memory 130 on the Internet. The description of the aforementioned memory is only an example, and the present disclosure is not limited thereto.

The network unit 150 according to an embodiment of the present disclosure may use various wired communication systems such as a Public Switched Telephone Network (PSTN), x Digital Subscriber Line (xDSL), Rate Adaptive DSL (RADSL), Multi Rate DSL (MDSL), Very High Speed DSL (VDSL), Universal Asymmetric DSL (UADSL), High Bit Rate DSL (HDSL), and a Local Area Network (LAN).

Also, the network unit 150 presented in the present specification may use various wireless communication systems such as Code Division Multi Access (CDMA), Time Division Multi Access (TDMA), Frequency Division Multi Access (FDMA), Orthogonal Frequency Division Multi Access (OFDMA), Single Carrier-FDMA (SC-FDMA), and other systems.

In the present disclosure, the network unit 150 may use any type of wired/wireless communication system.

The techniques described in the present specification may be used in other networks as well as the networks mentioned above.

FIG. 2 illustrates an exemplary structure of an artificial intelligence-based model according to an embodiment of the present disclosure.

Throughout the present specification, an artificial intelligence model, an artificial intelligence-based model, a calculation model, a neural network, a network function, and a neural network may be used with the same meaning.

A neural network may generally consist of a set of interconnected calculation units that may be referred to as nodes. These nodes may also be referred to as neurons. A neural network is configured to include at least one or more nodes. Nodes (or neurons) constituting neural networks may be interconnected by one or more links.

Within a neural network, one or more nodes connected through links may relatively form a relationship of an input node and an output node. The concepts of an input node and an output node are relative, and any node in an output node relationship with respect to one node may be in an input node relationship in a relationship with another node, and vice versa. As described above, an input node to output node relationship may be created around a link. One or more output nodes may be connected to one input node through links, and vice versa.

In an input node and output node relationship connected through one link, a value of data of the output node may be determined based on data input to the input node. Here, a link interconnecting the input node and the output node may have a weight. The weight may be variable, and may be varied by a user or an algorithm in order for the neural network to perform a desired function. For example, when one or more input nodes are interconnected to one output node by respective links, the output node may determine an output node value based on values input to the input nodes connected to the output node and weights set in links corresponding to the respective input nodes.

As described above, in a neural network, one or more nodes are interconnected through one or more links to form an input node and output node relationship within the neural network. Characteristics of a neural network may be determined according to the number of nodes and links in the neural network, an association relationship between nodes and links, and a value of a weight assigned to each of the links. For example, when two neural networks in which the same number of nodes and links exist and weight values of the links are different exist, the two neural networks may be recognized as being different from each other.

A neural network may consist of a set of one or more nodes. A subset of nodes constituting a neural network may constitute a layer. Some of nodes constituting a neural network may constitute one layer based on distances from an initial input node. For example, a set of nodes having a distance of n from an initial input node may constitute n layers. The distance from the initial input node may be defined by the minimum number of links that must be passed through to reach the corresponding node from the initial input node. However, such a definition of a layer is arbitrary for description, and an order of a layer within a neural network may be defined in a method different from that described above. For example, a layer of nodes may be defined by a distance from a final output node.

In an embodiment of the present disclosure, a set of neurons or nodes may be defined by an expression of a layer.

An initial input node may refer to one or more nodes to which data is directly input without passing through a link in a relationship with other nodes among nodes in a neural network. Alternatively, in a relationship between nodes based on links within a neural network, it may refer to nodes that do not have other input nodes connected by links. Similarly, a final output node may refer to one or more nodes that do not have an output node in a relationship with other nodes among nodes in a neural network. In addition, a hidden node may refer to nodes constituting a neural network other than an initial input node and a final output node.

In a neural network according to an embodiment of the present disclosure, the number of nodes of an input layer may be the same as the number of nodes of an output layer, and the number of nodes may decrease and then increase again as it progresses from the input layer to a hidden layer. In addition, in a neural network according to another embodiment of the present disclosure, the number of nodes of an input layer may be less than the number of nodes of an output layer, and the number of nodes may increase as it progresses from the input layer to a hidden layer. In addition, in a neural network according to another embodiment of the present disclosure, the number of nodes of an input layer may be more than the number of nodes of an output layer, and the number of nodes may decrease as it progresses from the input layer to a hidden layer. A neural network according to another embodiment of the present disclosure may be a neural network in a combined form of the aforementioned neural networks.

An artificial intelligence-based model according to an embodiment of the present disclosure may include a deep neural network (DNN). A deep neural network may refer to a neural network including a plurality of hidden layers in addition to an input layer and an output layer. By using a deep neural network, latent structures of data can be identified. That is, latent structures of photos, texts, videos, voices, protein sequence structures, gene sequence structures, peptide sequence structures, music (e.g., what object is in a photo, what the content and emotion of a text are, what the content and emotion of a voice are, etc.), and/or binding affinity between a peptide and MHC can be identified. A deep neural network may include a convolutional neural network (CNN), a recurrent neural network (RNN), an auto encoder, a restricted Boltzmann machine (RBM), a deep belief network (DBN), a Q network, a U network, a Siamese network, a Generative Adversarial Network (GAN), a Transformer, and the like. The description of the aforementioned deep neural network is only an example, and the present disclosure is not limited thereto.

An artificial intelligence-based model of the present disclosure may be represented by a network structure of any of the aforementioned structures including an input layer, a hidden layer, and an output layer.

A neural network that can be used in an artificial intelligence-based model of the present disclosure may be trained in at least one method among supervised learning, unsupervised learning, semi-supervised learning, transfer learning, active learning, or reinforcement learning. Training of a neural network may be a process of applying knowledge for a neural network to perform a specific operation to the neural network.

A neural network may be trained in a direction that minimizes an error of an output. Training of a neural network is a process of repeatedly inputting training data to the neural network, calculating an error of an output of the neural network and a target for the training data, and backpropagating the error of the neural network from an output layer of the neural network toward an input layer in a direction to reduce the error to update a weight of each node of the neural network. In the case of supervised learning, training data in which a correct answer is labeled for each training data is used (i.e., labeled training data), and in the case of unsupervised learning, a correct answer may not be labeled for each training data. That is, for example, in the case of supervised learning regarding data classification, training data may be data in which a category is labeled for each training data. Labeled training data is input to a neural network, and an error can be calculated by comparing an output (category) of the neural network with a label of the training data. As another example, in the case of unsupervised learning regarding data classification, an error can be calculated by comparing training data, which is an input, with a neural network output. The calculated error is backpropagated in a reverse direction (i.e., from an output layer toward an input layer) in the neural network, and a connection weight of each node of each layer of the neural network can be updated according to backpropagation. A variation of a connection weight of each updated node may be determined according to a learning rate. Calculation of a neural network for input data and backpropagation of an error may constitute a learning cycle (epoch). A learning rate may be applied differently according to the number of repetitions of a learning cycle of a neural network. For example, in the early stage of learning of a neural network, efficiency can be increased by using a high learning rate so that the neural network quickly secures a certain level of performance, and in the late stage of learning, accuracy can be increased by using a low learning rate.

In learning of a neural network, generally, training data may be a subset of actual data (i.e., data to be processed using a trained neural network), and thus, there may be a learning cycle in which an error for training data decreases but an error for actual data increases. Overfitting is a phenomenon in which an error for actual data increases due to excessive training on training data as described above. For example, a phenomenon in which a neural network that has learned a cat by showing a yellow cat does not recognize a cat other than yellow as a cat may be a kind of overfitting. Overfitting may act as a cause of increasing an error of a machine learning algorithm. Various optimization methods may be used to prevent such overfitting. To prevent overfitting, methods such as increasing training data, regularization, dropout for deactivating some nodes of a network in a learning process, utilization of a batch normalization layer, and the like may be applied.

An artificial intelligence-based model according to an embodiment of the present disclosure may include a Large Language Model (LLM). A large language model in the present disclosure may refer to an artificial intelligence-based model trained using a vast amount of training data to perform Natural Language Processing. A large language model may include a transformer, an encoder-based model of a transformer, and/or a decoder-based model of a transformer. An encoder-based model of a transformer may correspond to an artificial intelligence model using an encoder structure of a transformer. A decoder-based model of a transformer may correspond to an artificial intelligence model using a decoder structure of a transformer.

In an embodiment, a transformer may consist of an encoder for encoding input data and a decoder for decoding encoded data. A transformer may have a structure that outputs a series of output data through encoding and decoding steps by taking a series of input data as an input. In an embodiment, a series of input data may be processed into a form capable of calculation by a transformer. A process of processing a series of input data into a form capable of calculation by a transformer may include a tokenizing process and an embedding process. A tokenizing process may refer to a process of dividing a series of input data into tokens of a certain unit. For example, a certain unit may include a word unit. An embedding process may refer to a process of converting at least one token tokenized from a series of input data into an embedding vector.

In an embodiment, a transformer may obtain an embedding vector to be input to an encoder by summing a token embedding vector in which at least one token corresponding to a series of input data is embedded, a segment embedding vector for distinguishing a sentence including a token for each token, and a positional embedding vector reflecting a position of a token. An encoder-based model and a decoder-based model of a transformer may also perform the same method to obtain an embedding vector.

In an embodiment, in order for a transformer to encode and decode a series of input data, an encoder and a decoder in the transformer may utilize an attention algorithm. An attention algorithm refers to an algorithm that calculates a similarity by applying a softmax function to an attention score obtained by multiplying a given query by a key in a matrix multiplication, and calculates an attention value for the query by multiplying the calculated similarity by a value in a matrix multiplication.

In an embodiment, a self-attention algorithm may refer to an attention algorithm using a query, a key, and a value generated by respectively multiplying the same embedding vector by a query weight, a key weight, and a value weight. A cross-attention algorithm may refer to an attention algorithm using a query generated by multiplying a first embedding vector by a query weight, and a key and a value generated by respectively multiplying a second embedding vector by a key weight and a value weight. A query weight, a key weight, and a value weight may be trainable parameters updated through a learning process of a large language model.

In an embodiment, an encoder of a transformer may include an embedding layer, a self-attention layer applying a self-attention algorithm to an embedding vector, a normalization layer, and a Feed Forward Neural Network (FFN). Also, the encoder may have a form in which N unit structures including a self-attention layer, a normalization layer, and a feed forward neural network are connected. A decoder of a transformer may include an embedding layer, a masked self-attention layer, a normalization layer, a cross-attention layer applying a cross-attention algorithm, and a feed forward neural network. Also, the decoder may have a form in which N unit structures including a masked self-attention layer, a normalization layer, a cross-attention layer, and a feed forward neural network are connected. A masked self-attention layer may correspond to a layer that obtains an attention value for each of sequences in which words are sequentially included, among a plurality of words included in a series of input data.

A transformer may include additional components such as a linear layer and a softmax layer as well as an encoder and a decoder. An encoder-based model and a decoder-based model of a transformer may also include the additional components as well as an encoder and a decoder, respectively. A method of configuring a transformer using an attention algorithm may include a method disclosed in Vaswani et al., Attention Is All You Need, 2017 NIPS, which is incorporated herein by reference.

In an embodiment, an attention layer such as a self-attention layer, a masked self-attention layer, and a cross-attention layer may correspond to a multi-head attention layer including a plurality of attention layers in parallel. A multi-head attention layer may concatenate attention values output from each of a plurality of attention layers, and output an output attention value by multiplying the concatenated matrix by an output weight in a matrix multiplication. An output attention value output from a multi-head attention layer may have the same size as an attention value output from one attention layer.

In an embodiment, a transformer may be trained through a Masked Language Model (MLM) process, a Next Sentence Prediction (NSP) process, and the like. An MLM process may refer to a learning process of predicting a masked word through a series of training data in which some words are masked. An NSP process may refer to a learning process of determining whether two sentences are connected sentences in a series of training data including any two sentences.

In an embodiment, a large language model may process various data formats such as image data, audio data, and video data as well as natural language text. A large language model may embed data to convert data having various data formats into a series of data capable of calculation. A large language model may process additional data expressing a relative positional relationship or a topological relationship between a series of input data. Alternatively, a series of input data may be embedded by additionally reflecting vectors expressing a relative positional relationship or a topological relationship between input data to a series of input data. In an example, a relative positional relationship between a series of input data may include a word order within a natural language sentence, a relative positional relationship of each divided image, a time order of divided audio waveforms, and the like, but is not limited thereto. A process of adding information expressing a relative positional relationship or a topological relationship between a series of input data may be referred to as positional encoding.

An example of a large language model processing image data (Vision Transformer, ViT) is disclosed in Dosovitskiy, et al., AN IMAGE IS WORTH 16X16 WORDS: TRANSFORMERS FOR IMAGE RECOGNITION AT SCALE, which is incorporated herein by reference.

An artificial intelligence model according to an embodiment of the present disclosure may include a multi-modal large language model. A multi-modal large language model may refer to a large language model capable of understanding and processing relationships between different data formats such as natural language text data, image data, audio data, and video data. A multi-modal language model may include a plurality of encoders encoding input data corresponding to each data format. A multi-modal language model may be trained to calculate similarities between embedding vectors encoded from encoders of each data format through training data including data of different data formats, and to calculate a similarity for the same pair more highly and a similarity for different pairs more lowly.

An example of a multi-modal large language model that understands and processes a relationship between image data and natural language text data (Contrastive Language-Image Pre-training, CLIP) is disclosed in Alec Radford, et al., LEARNING TRANSFERABLE VISUAL MODELS FROM NATURAL LANGUAGE SUPERVISION, which is incorporated herein by reference.

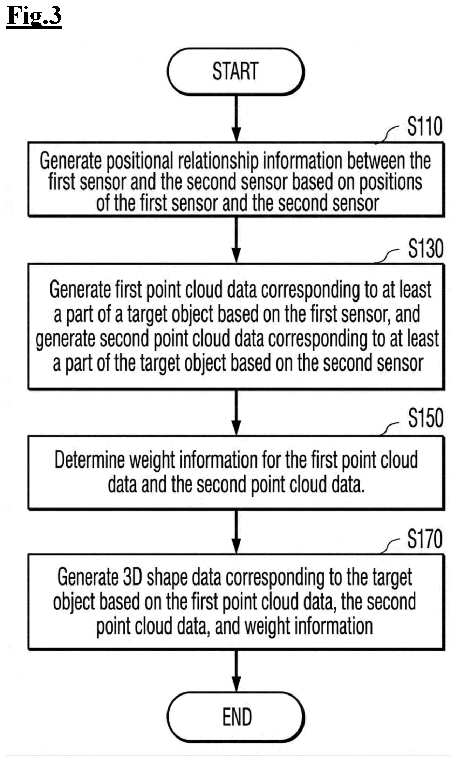

FIG. 3 is a flowchart illustrating a process of extracting a 3D shape of an object using a plurality of contactless sensors according to an embodiment of the present disclosure.

According to FIG. 3, a process of extracting a 3D shape of an object using a plurality of contactless sensors in the present disclosure may include generating positional relationship information between a first sensor and a second sensor based on positions of the first sensor and the second sensor (S110), generating first point cloud data corresponding to at least a part of a target object based on a first sensor and generating second point cloud data corresponding to at least a part of the target object based on a second sensor (S130), determining weight information for the first point cloud data and the second point cloud data (S150), and generating 3D shape data corresponding to the target object based on the first point cloud data, the second point cloud data, and the weight information (S170).

In step S110, the processor 110 may generate positional relationship information between the first sensor and the second sensor based on positions of the first sensor and the second sensor. A specific process of generating positional relationship information of the first sensor and the second sensor has been described above with reference to FIG. 1.

In step S130, the processor 110 may generate first point cloud data corresponding to at least a part of a target object based on the first sensor, and generate second point cloud data corresponding to at least a part of the target object based on the second sensor. To determine a first offset value, the processor 110 may determine a specific point of the target object as a first point and generate a measurement value corresponding to the first point of the target object utilizing the first sensor. Thereafter, the processor 110 may utilize a third sensor, which is a contact sensor, to generate a measurement value corresponding to the same first point. In this case, since the third sensor scans only a specific point rather than the entire target object, a process of determining the first offset value does not take much time. The processor 110 may determine a first offset value corresponding to the first sensor based on comparing a measurement value generated utilizing the first sensor and a measurement value generated utilizing the third sensor corresponding to the first point. The same process as above may be performed by the processor 110 for other sensors including the second sensor.

Thereafter, the processor 110 may correct the first point cloud data based on the first offset value and correct the second point cloud data based on the second offset value. For example, when the first offset value is measured as (0, 0, 0.1), the processor 110 may perform correction by (0, 0, -0.1) for all data included in the first point cloud data. The same process as above may be performed by the processor 110 for other sensors including the second sensor.

In step S150, the processor 110 may determine weight information for the first point cloud data and the second point cloud data. Various factors for determining weight information may include location-based weight and data-based weight. As described above with reference to FIG. 1, in order to determine weight information for the first point cloud data and the second point cloud data, the processor 110 may determine location-based weight information based on a distance between each sensor and the target object, while determining data-based weight information based on comparing the number of points of the first point cloud data and the second point cloud data, and then finally determine weight information based on combining the location-based weight information and the data-based weight information.

In step S170, the processor 110 may generate 3D shape data corresponding to the target object based on the first point cloud data, the second point cloud data, and weight information. By performing calibration based on an offset value for each non-contact sensor and synthesizing data in a way that gives a high weight to more accurate data, accurate 3D shape data corresponding to a target object can be quickly acquired.

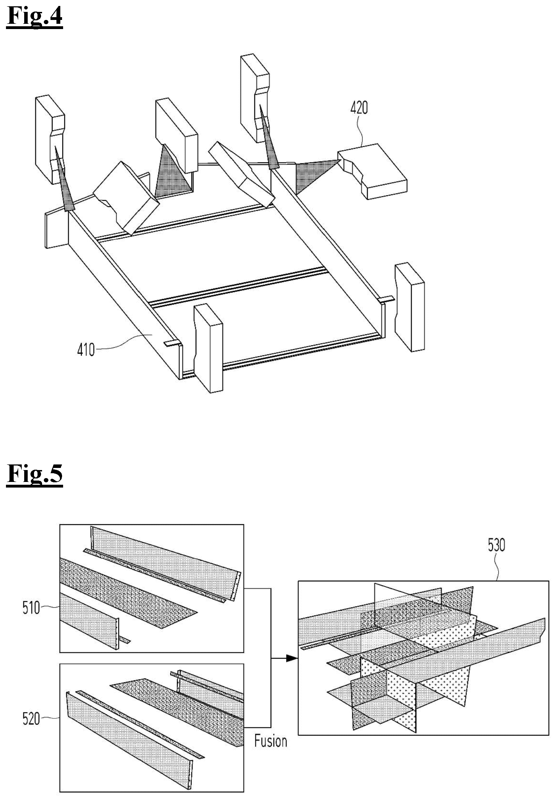

FIG. 4 is a conceptual diagram illustrating a process of generating 3D shape data of an object using a plurality of contactless sensors according to an embodiment of the present disclosure.

Referring to FIG. 4, to generate 3D shape data corresponding to a target object 410 having a substantially U-shaped cross-section, eight contactless sensors 420 are arranged at respective positions. In the present disclosure, the processor 110 may generate positional relationship information between a first sensor and a second sensor for a plurality of sensors including the first sensor and the second sensor. In this case, the positional relationship information may be information on coordinates of each sensor in a rectangular coordinate system around the target object. The first sensor and the second sensor may be sensors of the same type, but different types of sensors may be used, and in this case, a center coordinate serving as a reference for the position of each sensor may be a center of gravity of each sensor or a predefined coordinate.

The positional relationship information between the first sensor and the second sensor may include information on a position between each sensor and the object to be measured and the sensor, in addition to the positional relationship information between sensors. For example, the processor 110 may determine the center coordinates of the target object as (0,0,0), and then determine that the first sensor is located at (3,-4, 5) and the second sensor is located at (-3, -4, -5).

However, the specific expression of generating positional information of a sensor is not limited to the above disclosure, and it is obvious to those skilled in the art that various techniques may be used to appropriately generate positional relationship information for registering data of various sensors including a camera.

The processor 110 may generate first point cloud data corresponding to at least a part of the target object based on the first sensor, while generating second point cloud data corresponding to at least a part of the target object based on the second sensor. In the present disclosure, each of the sensors may be arranged around the target object and may be set to face different directions to generate more accurate 3D shape data according to the shape of the target object.

Each sensor generates point cloud data corresponding to the same target object, and since the target object is a 3D solid, a blind spot that is not included in the measurement range of a fixed sensor may occur. Therefore, the point cloud data generated by utilizing a plurality of sensors corresponds to at least a part of the target object, and the point cloud data generated by utilizing each sensor may have scan data for a part of the target object while also having data corresponding to an overlapping area.

In order to extract a 3D shape of an object having a complex shape as described above with a contact sensor, a significant amount of time is required for path design and execution, but in the case of using a contactless sensor, 3D shape data can be easily generated by adjusting a position of a sensor and changing adjusted positional coordinates.

FIG. 5 is a conceptual diagram illustrating a process of generating 3D shape data of an object based on synthesizing point cloud data generated by each sensor according to an embodiment of the present disclosure.

Each sensor generates point cloud data, and correction using an offset value may be performed for each point cloud data. Thereafter, the processor 110 may generate 3D shape data 530 corresponding to a target object by registering first point cloud data 510 generated by a first sensor and second point cloud data 520 generated by a second sensor in one coordinate system.

In a process of generating 3D shape data 530, the processor 110 may determine weight information for the first point cloud data 510 and the second point cloud data 520. In the present disclosure, the weight information is a real value between 0 and 1 assigned according to each sensor, and may be a value such that the sum of weights assigned to each sensor is 1. For example, the processor 110 may determine values such as 0.6 for the first point cloud data 510 and 0.4 for the second point cloud data 520 as weights. In this case, the processor 110 may determine weights using various criteria that can determine reliability of data.

Specifically, in order to determine weight information for the first point cloud data 510 and the second point cloud data 520, the processor 110 may determine location-based weight information based on a distance between each sensor and the target object, while determining data-based weight information based on comparing the number of points of the first point cloud data 510 and the second point cloud data 520, and then finally determine weight information based on combining the location-based weight information and the data-based weight information.

In the present disclosure, as the distance between a sensor and the target object is shorter, the possibility of errors due to interference or reflection may decrease. Therefore, in order to determine location-based weight information, the processor 110 may allocate a higher value of location-based weight as the distance between the target object and each sensor is shorter. For example, when a distance between a center of the target object and a center of the first sensor is 4 cm and a distance between the center of the target object and the center of the second sensor is 1 cm, the processor 110 may determine a location-based weight for the first point cloud data 510 as 0.2 and a location-based weight for the second point cloud data 520 as 0.8.

Meanwhile, since it can be expected that accuracy of data in a corresponding area will be high when point cloud data is generated more densely, the processor 110 may allocate a higher data-based weight as the number of points included in the point cloud data generated by each sensor is larger. For example, when the first point cloud data 510 includes 13,000 points and the second point cloud data 520 includes 7,000 points, the processor 110 may determine a data-based weight for the first point cloud data 510 as 0.65 and a data-based weight for the second point cloud data 520 as 0.35.

The processor 110 may finally determine weight information based on combining the location-based weight information and the data-based weight information. For example, when the location-based weight of the first point cloud data 510 is 0.2 and the data-based weight is 0.65, and the location-based weight of the second point cloud data 520 is 0.8 and the data-based weight is 0.35, the processor 110 may determine the weight of the first point cloud data 510 as (0.2+0.65)/2=0.425 and the weight of the second point cloud data 520 as (0.8+0.35)/2=0.575.

Thereafter, the processor 110 may generate 3D shape data corresponding to the target object based on the first point cloud data 510, the second point cloud data 520, and weight information. Specifically, the processor 110 may register the first point cloud data 510 and the second point cloud data 520 utilizing positional relationship information of the first sensor and the second sensor, and generate 3D shape data corresponding to the target object by applying weights to each point cloud data.

Meanwhile, a computer-readable medium storing a data structure according to an embodiment of the present disclosure is disclosed.

A data structure may refer to organization, management, and storage of data that enable efficient access and modification to data. A data structure may refer to organization of data for solving a specific problem (e.g., data retrieval, data storage, data modification in the shortest time). A data structure may be defined as a physical or logical relationship between data elements designed to support a specific data processing function. A logical relationship between data elements may include a connection relationship between user-defined data elements. A physical relationship between data elements may include an actual relationship between data elements physically stored in a computer-readable storage medium (e.g., a permanent storage device). A data structure may specifically include a set of data, a relationship between data, and a function or a command applicable to data. Through an effectively designed data structure, a computing device may perform calculation while using resources of the computing device minimally. Specifically, a computing device may increase efficiency of calculation, reading, insertion, deletion, comparison, exchange, and retrieval through an effectively designed data structure.

A data structure may be divided into a linear data structure and a non-linear data structure according to a form of the data structure. A linear data structure may be a structure in which only one data is connected after one data. A linear data structure may include a list, a stack, a queue, and a deque. A list may refer to a series of data sets in which an order exists internally. A list may include a linked list. A linked list may be a data structure in which data is connected in a method in which each data has a pointer and is connected in one line. In a linked list, a pointer may include connection information with the next or previous data. A linked list may be expressed as a single linked list, a double linked list, or a circular linked list according to its form. A stack may be a data arrangement structure capable of accessing data limitedly. A stack may be a linear data structure capable of processing data (e.g., insertion or deletion) at only one end of the data structure. Data stored in a stack may be a data structure (LIFO-Last In First Out) in which data that enters later comes out faster. A queue is a data arrangement structure capable of accessing data limitedly, and unlike a stack, it may be a data structure (FIFO-First In First Out) in which data stored later comes out later. A deque may be a data structure capable of processing data at both ends of the data structure.

A non-linear data structure may be a structure in which a plurality of data are connected after one data. A non-linear data structure may include a graph data structure. A graph data structure may be defined by a vertex and an edge, and an edge may include a line connecting two different vertices. A graph data structure may include a tree data structure. A tree data structure may be a data structure in which there is one path connecting two different vertices among a plurality of vertices included in a tree. That is, it may be a data structure that does not form a loop in a graph data structure.

Throughout the present specification, a calculation model, a neural network, a network function, and a neural network may be used with the same meaning. Hereinafter, it will be described as a neural network. A data structure may include a neural network. And a data structure including a neural network may be stored in a computer-readable medium. A data structure including a neural network may also include data preprocessed for processing by a neural network, data input to a neural network, weights of a neural network, hyper parameters of a neural network, data acquired from a neural network, an activation function associated with each node or layer of a neural network, a loss function for learning of a neural network, and the like. A data structure including a neural network may include any components among the components disclosed above. That is, a data structure including a neural network may consist of all or any combination of data preprocessed for processing by a neural network, data input to a neural network, weights of a neural network, hyper parameters of a neural network, data acquired from a neural network, an activation function associated with each node or layer of a neural network, a loss function for learning of a neural network, and the like. In addition to the aforementioned configurations, a data structure including a neural network may include any other information determining characteristics of a neural network. In addition, a data structure may include all forms of data used or generated in a calculation process of a neural network and is not limited to the aforementioned matters. A computer-readable medium may include a computer-readable recording medium and/or a computer-readable transmission medium. A neural network may generally consist of a set of interconnected calculation units that may be referred to as nodes. These nodes may also be referred to as neurons. A neural network is configured to include at least one or more nodes.

A data structure may include data input to a neural network. A data structure including data input to a neural network may be stored in a computer-readable medium. Data input to a neural network may include training data input in a neural network learning process and/or input data input to a neural network whose learning is completed. Data input to a neural network may include data that has undergone preprocessing and/or data to be preprocessed. Preprocessing may include a data processing process for inputting data into a neural network. Therefore, a data structure may include data to be preprocessed and data generated by preprocessing. The aforementioned data structure is only an example, and the present disclosure is not limited thereto.

A data structure may include weights of a neural network. (In the present specification, weights and parameters may be used with the same meaning.) And a data structure including weights of a neural network may be stored in a computer-readable medium. A neural network may include a plurality of weights. Weights may be variable, and may be varied by a user or an algorithm in order for the neural network to perform a desired function. For example, when one or more input nodes are interconnected to one output node by respective links, the output node may determine a data value output from the output node based on values input to the input nodes connected to the output node and weights set in links corresponding to the respective input nodes. The aforementioned data structure is only an example, and the present disclosure is not limited thereto.

As a non-limiting example, weights may include weights varied in a neural network learning process and/or weights whose neural network learning is completed. Weights varied in a neural network learning process may include weights at a time point when a learning cycle starts and/or weights varied during a learning cycle. Weights whose neural network learning is completed may include weights whose learning cycle is completed. Therefore, a data structure including weights of a neural network may include a data structure including weights varied in a neural network learning process and/or weights whose neural network learning is completed. Therefore, the aforementioned weights and/or combinations of respective weights are assumed to be included in a data structure including weights of a neural network. The aforementioned data structure is only an example, and the present disclosure is not limited thereto.

A data structure including weights of a neural network may be stored in a computer-readable storage medium (e.g., a memory, a hard disk) after undergoing a serialization process. Serialization may be a process of converting a data structure into a form that can be stored in the same or another computing device and later reconstructed and used. A computing device may serialize a data structure to transmit and receive data through a network. A data structure including serialized weights of a neural network may be reconstructed in the same computing device or another computing device through deserialization. A data structure including weights of a neural network is not limited to serialization. Furthermore, a data structure including weights of a neural network may include a data structure (e.g., B-Tree, Trie, m-way search tree, AVL tree, Red-Black Tree in a non-linear data structure) for increasing efficiency of calculation while using resources of a computing device minimally. The aforementioned matters are only examples, and the present disclosure is not limited thereto.

A data structure may include hyper-parameters of a neural network. And a data structure including hyper-parameters of a neural network may be stored in a computer-readable medium. Hyper-parameters may be variables varied by a user. Hyper-parameters may include, for example, a learning rate, a cost function, the number of repetitions of a learning cycle, weight initialization (e.g., setting a range of weight values to be weight initialization targets), and the number of hidden units (e.g., the number of hidden layers, the number of nodes of hidden layers). The aforementioned data structure is only an example, and the present disclosure is not limited thereto.

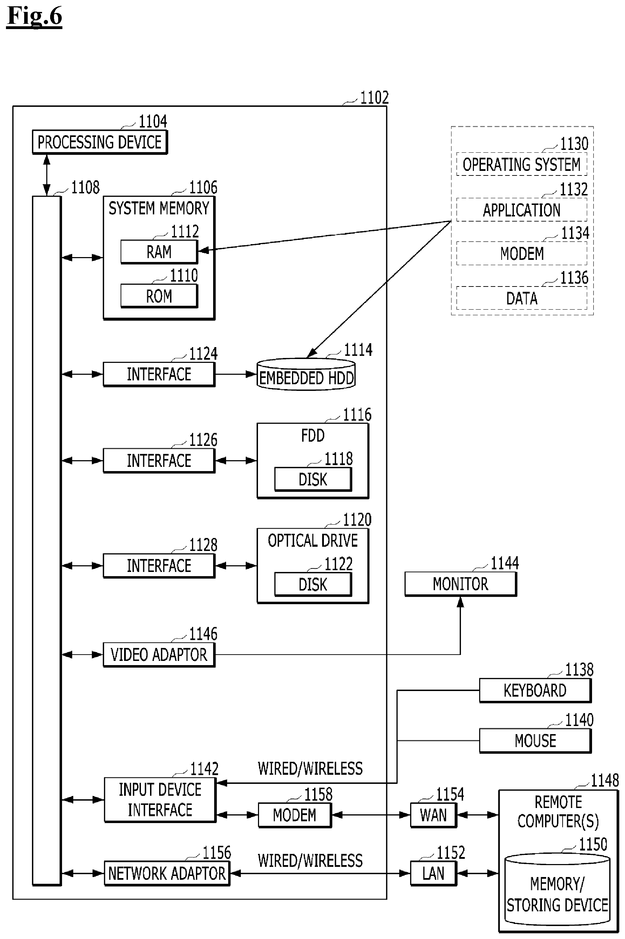

FIG. 6 is a brief and general schematic diagram of an exemplary computing environment in which embodiments of the present disclosure may be implemented.

Although the present disclosure has been described above as generally being implemented by a computing device, those skilled in the art will appreciate that the present disclosure may be implemented in combination with computer-executable instructions and/or other program modules that can be executed on one or more computers and/or as a combination of hardware and software.

Generally, program modules include routines, programs, components, data structures, etc. that perform specific tasks or implement specific abstract data types. In addition, those skilled in the art will appreciate that the method of the present disclosure may be practiced with other computer system configurations including single-processor or multiprocessor computer systems, minicomputers, mainframe computers, as well as personal computers, handheld computing devices, microprocessor-based or programmable consumer electronics, etc., each of which may operate in connection with one or more associated devices.

The described embodiments of the present disclosure may also be practiced in distributed computing environments where certain tasks are performed by remote processing devices that are linked through a communications network. In a distributed computing environment, program modules may be located in both local and remote memory storage devices.

A computer typically includes various computer-readable media. Any medium accessible by a computer may be a computer-readable medium, and such computer-readable media include volatile and non-volatile media, transitory and non-transitory media, and removable and non-removable media. By way of example, and not limitation, computer-readable media may include computer-readable storage media and computer-readable transmission media. Computer-readable storage media include volatile and non-volatile, transitory and non-transitory, removable and non-removable media implemented in any method or technology for storage of information such as computer-readable instructions, data structures, program modules, or other data. Computer-readable storage media include, but are not limited to, RAM, ROM, EEPROM, flash memory or other memory technology, CD-ROM, digital video disk (DVD) or other optical disk storage, magnetic cassettes, magnetic tape, magnetic disk storage or other magnetic storage devices, or any other medium which can be used to store the desired information and which can be accessed by a computer.

Computer-readable transmission media typically embody computer-readable instructions, data structures, program modules, or other data in a modulated data signal such as a carrier wave or other transport mechanism and include any information delivery media. The term "modulated data signal" means a signal that has one or more of its characteristics set or changed in such a manner as to encode information in the signal. By way of example, and not limitation, computer-readable transmission media include wired media such as a wired network or direct-wired connection, and wireless media such as acoustic, RF, infrared, and other wireless media. Combinations of any of the above should also be included within the scope of computer-readable transmission media.

An exemplary environment for implementing various aspects of the present disclosure including a computer 1102 is shown, and the computer 1102 includes a processing unit 1104, a system memory 1106, and a system bus 1108. The system bus 1108 couples system components including, but not limited to, the system memory 1106 to the processing unit 1104. The processing unit 1104 can be any of various commercially available processors. Dual processors and other multi-processor architectures may also be employed as the processing unit 1104.

The system bus 1108 can be any of several types of bus structure that may further interconnect to a memory bus, a peripheral bus, and a local bus using any of a variety of commercially available bus architectures. The system memory 1106 includes read only memory (ROM) 1110 and random access memory (RAM) 1112. A basic input/output system (BIOS) is stored in a non-volatile memory 1110 such as ROM, EPROM, EEPROM, etc., and this BIOS contains the basic routines that help to transfer information between elements within the computer 1102, such as during start-up. The RAM 1112 may also include a high-speed RAM such as static RAM for caching data.

The computer 1102 further includes an internal hard disk drive (HDD) 1114 (e.g., EIDE, SATA), which internal hard disk drive 1114 may also be configured for external use in a suitable chassis (not shown), a magnetic floppy disk drive (FDD) 1116 (e.g., to read from or write to a removable diskette 1118), and an optical disk drive 1120 (e.g., to read a CD-ROM disk 1122 or to read from or write to other high capacity optical media such as a DVD). The hard disk drive 1114, magnetic disk drive 1116, and optical disk drive 1120 can be connected to the system bus 1108 by a hard disk drive interface 1124, a magnetic disk drive interface 1126, and an optical drive interface 1128, respectively. The interface 1124 for external drive implementations includes at least one or both of Universal Serial Bus (USB) and IEEE 1394 interface technologies.

These drives and their associated computer-readable media provide non-volatile storage of data, data structures, computer-executable instructions, and so forth. For the computer 1102, the drives and media accommodate the storage of any data in a suitable digital format. Although the description of computer-readable media above refers to an HDD, a removable magnetic disk, and a removable optical media such as a CD or DVD, those skilled in the art will appreciate that other types of media readable by a computer, such as zip drives, magnetic cassettes, flash memory cards, cartridges, and the like, may also be used in the exemplary operating environment, and that any such media may contain computer-executable instructions for performing the methods of the present disclosure.

A number of program modules can be stored in the drives and RAM 1112, including an operating system 1130, one or more application programs 1132, other program modules 1134, and program data 1136. All or a portion of the operating system, applications, modules, and/or data may also be cached in the RAM 1112. It will be appreciated that the present disclosure can be implemented with various commercially available operating systems or combinations of operating systems.

A user can enter commands and information into the computer 1102 through one or more wired/wireless input devices, for example, a keyboard 1138 and a pointing device such as a mouse 1140. Other input devices (not shown) may include a microphone, an IR remote control, a joystick, a game pad, a stylus pen, a touch screen, and so forth. These and other input devices are often connected to the processing unit 1104 through an input device interface 1142 that is coupled to the system bus 1108, but can be connected by other interfaces, such as a parallel port, an IEEE 1394 serial port, a game port, a USB port, an IR interface, and so forth.

A monitor 1144 or other type of display device is also connected to the system bus 1108 via an interface, such as a video adapter 1146. In addition to the monitor 1144, a computer typically includes other peripheral output devices (not shown) such as speakers, printers, and so forth.

The computer 1102 may operate in a networked environment using logical connections to one or more remote computers, such as remote computer(s) 1148 through wired and/or wireless communications. The remote computer(s) 1148 can be a workstation, a computing device computer, a router, a personal computer, a portable computer, a microprocessor-based entertainment appliance, a peer device, or other common network node, and typically includes many or all of the elements described relative to the computer 1102, although, for purposes of brevity, only a memory storage device 1150 is illustrated. The logical connections depicted include wired/wireless connectivity to a local area network (LAN) 1152 and/or larger networks, for example, a wide area network (WAN) 1154. Such LAN and WAN networking environments are commonplace in offices and companies, and facilitate enterprise-wide computer networks, such as intranets, all of which may connect to a global computer network, for example, the Internet.

When used in a LAN networking environment, the computer 1102 is connected to the local network 1152 through a wired and/or wireless communication network interface or adapter 1156. The adapter 1156 may facilitate wired or wireless communication to the LAN 1152, which may also include a wireless access point disposed thereon for communicating with the wireless adapter 1156. When used in a WAN networking environment, the computer 1102 can include a modem 1158, or is connected to a communications computing device on the WAN 1154, or has other means for establishing communications over the WAN 1154, such as by way of the Internet. The modem 1158, which can be internal or external and a wired or wireless device, is connected to the system bus 1108 via the serial port interface 1142. In a networked environment, program modules depicted relative to the computer 1102, or portions thereof, can be stored in the remote memory/storage device 1150. It will be appreciated that the network connections shown are exemplary and other means of establishing a communications link between the computers can be used.

The computer 1102 is operable to communicate with any wireless devices or entities disposed in wireless communication, for example, a printer, a scanner, a desktop and/or portable computer, a PDA (portable data assistant), communications satellites, any equipment or location associated with a wirelessly detectable tag, and a telephone. This includes at least Wi-Fi and Bluetooth wireless technologies. Thus, the communication can be a predefined structure as in a conventional network or simply an ad hoc communication between at least two devices.

Wi-Fi (Wireless Fidelity) allows connection to the Internet and the like without wires. Wi-Fi is a wireless technology such as a cell phone that allows such devices, for example, computers to send and receive data indoors and outdoors, that is, anywhere within the range of a base station. Wi-Fi networks use a wireless technology called IEEE 802.11 (a, b, g, etc.) to provide secure, reliable, and high-speed wireless connections. Wi-Fi can be used to connect computers to each other, to the Internet, and to wired networks (using IEEE 802.3 or Ethernet). Wi-Fi networks operate in the unlicensed 2.4 and 5 GHz radio bands, for example, at an 11 Mbps (802.11a) or 54 Mbps (802.11b) data rate, or can operate in products that include both bands (dual band).

Those skilled in the art of the present disclosure will understand that information and signals can be represented using any of a variety of different technologies and techniques. For example, data, instructions, commands, information, signals, bits, symbols, and chips that may be referenced in the above description may be represented by voltages, currents, electromagnetic waves, magnetic fields or particles, optical fields or particles, or any combination thereof.

Those skilled in the art of the present disclosure will understand that various illustrative logical blocks, modules, processors, means, circuits, and algorithm steps described in connection with the embodiments disclosed herein may be implemented by electronic hardware, various forms of programs or design code (which are referred to herein as software for convenience), or a combination of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Those skilled in the art of the present disclosure may implement the described functionality in varying ways for each particular application, but such implementation decisions should not be interpreted as causing a departure from the scope of the present disclosure.

Various embodiments presented herein may be implemented as a method, an apparatus, or an article of manufacture using standard programming and/or engineering techniques. The term article of manufacture includes a computer program, a carrier, or media accessible from any computer-readable storage device. For example, computer-readable storage media include magnetic storage devices (e.g., hard disks, floppy disks, magnetic strips, etc.), optical disks (e.g., CD, DVD, etc.), smart cards, and flash memory devices (e.g., EEPROM, cards, sticks, key drives, etc.), but are not limited thereto. In addition, various storage media presented herein include one or more devices for storing information and/or other machine-readable media.

It is to be understood that the specific order or hierarchy of steps in the processes presented is an example of exemplary approaches. Based on design priorities, it is to be understood that the specific order or hierarchy of steps in the processes may be rearranged within the scope of the present disclosure. The accompanying method claims provide elements of various steps in a sample order but are not meant to be limited to the specific order or hierarchy presented.

The description of the presented embodiments is provided to enable any person skilled in the art of the present disclosure to make or use the present disclosure. Various modifications to these embodiments will be readily apparent to those skilled in the art of the present disclosure, and the general principles defined herein may be applied to other embodiments without departing from the scope of the present disclosure. Thus, the present disclosure is not limited to the embodiments presented herein, but is to be interpreted in the broadest scope consistent with the principles and novel features presented herein.

## Claims

1. A method performed by a computing device for extracting a 3D shape of an object using a plurality of contactless sensors, the method comprising:
generating positional relationship information between a first sensor and a second sensor based on positions of the first sensor and the second sensor;
generating first point cloud data corresponding to at least a part of a target object based on the first sensor;
generating second point cloud data corresponding to at least a part of the target object based on the second sensor;
determining weight information for the first point cloud data and the second point cloud data; and
generating 3D shape data corresponding to the target object based on the first point cloud data, the second point cloud data, and the weight information.

2. The method of claim 1, further comprising:
prior to the determining of the weight information for the first point cloud data and the second point cloud data,
generating a validity verification result for the first point cloud data and the second point cloud data using an artificial neural network model.

3. The method of claim 2 , wherein the generating of the validity verification result for the first point cloud data and the second point cloud data using the artificial neural network model comprises:
detecting an abnormality of the first sensor based on inputting the first point cloud data into the artificial neural network model;
detecting an abnormality of the second sensor based on inputting the second point cloud data into the artificial neural network model; and
generating the validity verification result based on the abnormality of the first sensor and the abnormality of the second sensor.

4. The method of claim 3 , wherein the artificial neural network model is an AutoEncoder-based artificial neural network model, and
wherein the detecting of the abnormality of the first sensor based on inputting the first point cloud data into the artificial neural network model comprises:
detecting the abnormality of the first sensor based on a reconstruction error of the artificial neural network model for the first point cloud data.

5. The method of claim 4 , wherein the detecting of the abnormality of the first sensor based on inputting the first point cloud data into the artificial neural network model further comprises:
when the reconstruction error for the first point cloud data of the first sensor is equal to or greater than a predetermined threshold value, generating user notification information related to the abnormality of the first sensor.

6. The method of claim 1 , wherein the determining of the weight information for the first point cloud data and the second point cloud data comprises:
determining location-based weight information based on a distance between the first sensor and the target object and a distance between the second sensor and the target object;
determining data-based weight information based on comparing the number of points of the first point cloud data and the second point cloud data; and
determining the weight information based on combining the location-based weight information and the data-based weight information.

7. The method of claim 6 , wherein the determining of the location-based weight information based on the distance between the first sensor and the target object and the distance between the second sensor and the target object comprises:
allocating a higher location-based weight as the distance between the target object and each sensor is shorter.

8. The method of claim 6 , wherein the determining of the data-based weight information based on comparing the number of points of the first point cloud data and the second point cloud data comprises:
allocating a higher data-based weight as the number of points included in each point cloud data is larger.

9. The method of claim 1, further comprising:
prior to the generating of the 3D shape data corresponding to the target object based on the first point cloud data, the second point cloud data, and the weight information,
determining a first offset value corresponding to the first sensor;
determining a second offset value corresponding to the second sensor;
correcting the first point cloud data based on the first offset value; and
correcting the second point cloud data based on the second offset value.

10. The method of claim 9 , wherein the determining of the first offset value corresponding to the first sensor comprises:
generating a measurement value corresponding to a first point of the target object using the first sensor;
generating a measurement value corresponding to the first point using a third sensor which is a contact sensor; and
determining the first offset value based on comparing the measurement value generated using the first sensor and the measurement value generated using the third sensor, each corresponding to the first point.

11. A non-transitory computer-readable storage medium storing a computer program that, causes a computing device to perform operations for extracting a 3D shape of an object using a plurality of contactless sensors, the operations comprising:
generating positional relationship information between a first sensor and a second sensor based on positions of the first sensor and the second sensor;
generating first point cloud data corresponding to at least a part of a target object based on the first sensor;
generating second point cloud data corresponding to at least a part of the target object based on the second sensor;
determining weight information for the first point cloud data and the second point cloud data; and
generating 3D shape data corresponding to the target object based on the first point cloud data, the second point cloud data, and the weight information.

12. The non-transitory computer-readable storage medium storing a computer program of claim 11, the operations further comprising:
prior to the determining of the weight information for the first point cloud data and the second point cloud data,
generating a validity verification result for the first point cloud data and the second point cloud data using an artificial neural network model.

13. The non-transitory computer-readable storage medium storing a computer program of claim 12 , wherein the generating of the validity verification result for the first point cloud data and the second point cloud data using the artificial neural network model comprises:
detecting an abnormality of the first sensor based on inputting the first point cloud data into the artificial neural network model;
detecting an abnormality of the second sensor based on inputting the second point cloud data into the artificial neural network model; and
generating the validity verification result based on the abnormality of the first sensor and the abnormality of the second sensor.

14. The non-transitory computer-readable storage medium storing a computer program of claim 13 , wherein the artificial neural network model is an AutoEncoder-based artificial neural network model, and
wherein the detecting of the abnormality of the first sensor based on inputting the first point cloud data into the artificial neural network model comprises:
detecting the abnormality of the first sensor based on a reconstruction error of the artificial neural network model for the first point cloud data.

15. A computing device for extracting a 3D shape of an object using a plurality of contactless sensors, comprising:
at least one processor; and
a memory,
wherein the at least one processor is configured to:
generate positional relationship information between a first sensor and a second sensor based on positions of the first sensor and the second sensor,
generate first point cloud data corresponding to at least a part of a target object based on the first sensor,
generate second point cloud data corresponding to at least a part of the target object based on the second sensor,
determine weight information for the first point cloud data and the second point cloud data, and
generate 3D shape data corresponding to the target object based on the first point cloud data, the second point cloud data, and the weight information.
